Europäisches Patentamt

European Patent Office

Office européen des brevets

(19)

(11) Numéro de publication: **0 367 828**

**A1**

(12) **DEMANDE DE BREVET EUROPEEN PUBLI E EN APPLICATION DE L'article 158, paragraphe 3 de la CBE**

(21) Numéro de dépôt: 88907447.2

(22) Date de dépôt: 22.04.88

(86) Numéro de dépôt internationale : PCT/SU88/00095

(87) Numéro de publication internationale : WO 89/10277 (02.11.89 89/26)

(51) Int. Cl.⁵: **B60G 11/32**

(43) Date de publication de la demande: 16.05.90 Bulletin 90/20

(84) Etats contractants désignés: **DE FR GB IT SE**

(71) Demandeur: **KIEVSKY INZHENERNO-STROITELNY INSTITUT Vozdukhoflotsky pr., 31 Kiev 252037(SU)**

(72) Inventeur: **ZAMITTER, Mikhail Naumovich ul. Aviakonstruktora Antonova, 2/32-4-18 Kiev, 252043(SU)**
Inventeur: **AZAMATOV, Ramil Abdreevich Novy gorod, 17/03-98 Naberezhnye, 423823(SU)**
Inventeur: **ZEMA, Evgeny Mikhailovich ul. Chekhova, 1b-1 Dnepropetrovskaya obl. Sinelnikovo, 323110(SU)**
Inventeur: **NEDOREZOV, Vladimir Afanasievich ul. Chekhova, 1-2 Dnepropetrovskaya obl. Sinelnikovo, 323110(SU)**
Inventeur: **OBLOVATSKY, Anatoly Konstantinovich ul. Mira, 33-10 Dnepropetrovskaya obl. Sinelnikovo, 323110(SU)**
Inventeur: **SMIRNOV, Igor Gennadievich Novy gorod, 47/25-167 Naberezhnye Chelny, 423821(SU)**

(74) Mandataire: **Durand, Yves Armand Louis et al Cabinet Z. Weinstein 20, Avenue de Friedland F-75008 Paris(FR)**

(54) **SUSPENSION TRADITIONNELLE POUR ESSIEU DE VEHICULE.**

(57) A suspension for a vehicle axle comprises a leaf spring (1) carrying the frame (5) on the axle (2). To improve the smooth-running of the vehicle in a wide range of useful loads the suspension in provided with a leaf spring (11), C-shaped in its bending plane and hingedly connected at one end to the frame (5) and at the other to the axle (2). The connection to the axle (2) of the other end of the spring (11) is effected by means of a link (7) connected at one end with the axle (2) and at the other to a double-arm lever (8) connected, in turn, to the other end of the leaf spring (11). The rotation axis (9) of the double-arm lever (8) is carried by the frame (5).

## Suspension à essieu rigide pour moyen de transport

Domaine de l'invention

L'invention concerne les dispositifs destinés à amortir les charges dynamiques et a notamment pour objet les suspensions à essieu rigide pour un moyen de transport.

Etat de la technique

On connaît une suspension d'un d'essieu pour un moyen de transport comprenant un ressort composé de plusieurs lames de ressort et un cadre porteur d'un moyen de transport fixé sur l'essieu et un autre ressort, dont une extrémité est fixée au cadre et l'autre est associée par l'intermédiaire d'un compas d'articulation à l'essieu du moyen de transport (US,A,1811514). L'autre ressort sert à réduire les contraintes excessives provoquées dans le ressort principal soumis à l'action des charges trop grandes au cours du débattement. De plus, il fait office d'amortisseur en cas d'arrêts brutaux. Comme il découle de l'exposé ci-dessus, la suspension connue est caractérisée en ce que le premier ressort ou le ressort principal n'est pas soumis à l'action de charges trop grandes et l'autre ou deuxième ressort reste au repos sous l'action de charges normales.

Etant donné que sous l'action des charges ne dépassant pas une valeur déterminée le premier ressort peut agir indépendamment, sans aucune participation du deuxième ressort, ce premier ressort doit absorber solidement les charges et, de ce fait, se composer de plusieurs lames, comme c'est dans le cas pour la suspension décrite. Les ressorts à plusieurs lames se caractérisent par une masse considérable.

EP 0 367 828 A1

Exposé de l'invention

On s'est donc proposé de mettre au point une suspension à essieu rigide d'un moyen de transport dans laquelle la modification de la forme du ressort et de celle du lien élastique permettrait d'améliorer la caractéristique d'élasticité et, par conséquent, la douceur de marche.

Le problème ainsi posé est résolu à l'aide d'une suspension à essieu rigide pour moyen de transport comprenant un premier ressort composé des lames de ressort et un cadre porteur du moyen de transport et un autre (deuxième) ressort, lié par une extrémité au cadre et associé par l'autre extrémité, par l'intermédiaire d'un compas d'articulation, à l'essieu du moyen de transport, caractérisée, selon l'invention, en ce que le deuxième ressort est constitué par une tige dont la forme dans le plan de flexion est en "C" et en ce qu'un élément du compas d'articulation est constitué par un levier à deux bras, dont l'axe de rotation est lié au cadre.

Dans la suspension faisant l'objet de l'invention , le ressort à lames agit toujours de concert avec le ressort à tige en C et n'est soumis à l'action que de 20 à 30 % de la charge totale agissant sur la suspension. De ce fait, le ressort à lames peut comprendre un nombre relativement petit (3 à 5) de lames équipant un ressort de conception classique et, par conséquent, avoir une masse plus faible. Ce nombre de lames de ressort est suffisant pour que le ressort à lames puisse assumer sa fonction qui consiste à transmettre l'effort de traction depuis l'essieu au cadre et à réagir aux couples de freinage et de réaction agissant sur les roues. La forme en C du deuxième ressort dans le plan de flexion permet d'assurer une non-linéarité notable de la caractéristique d'élasticité de la suspension et, par conséquent, une plus grande douceur de marche du moyen de transport dans une large gamme de variation de la charge utile, ce qui permet d'éviter d'effectuer un réglage spécial (ou d'un réglage d'accord) de la suspension, comme il est dans le cas de l'antériorité la plus proche.

En plus des avantages relatifs à l'utilisation de la suspension conforme à l'invention, celle-ci permet d'obtenir une réduction considérable de la main-d'oeuvre nécessaire à sa fabrication et à son assemblage.

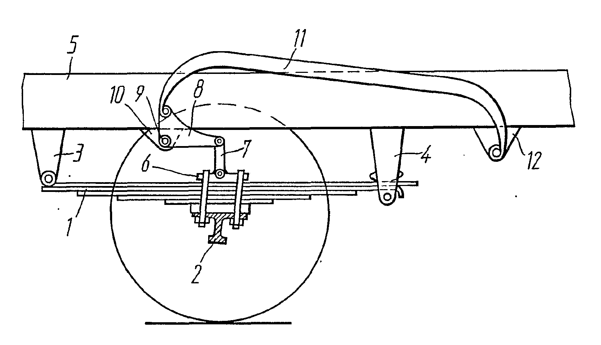

Description succinte du dessin

L'invention sera mieux comprise et d'autres buts, détails et avantages de celle-ci apparaîtront mieux à la lecture d'un mode de réalisation donné à titre d'exemple non limitatif avec référence au dessin annexé non limitatif qui représente la suspension faisant l'objet de l'invention, le moyen de transport étant soumis à l'action de la charge statique.

Meilleure variante de réalisation de l'invention

Comme on le peut voir sur le dessin, la suspension faisant l'objet de l'invention comporte un premier ressort formé par un jeu de lames 1 de ressort, fixé rigidement par sa partie médiane à un essieu 2 d'un moyen de transport et articulé par ses extrémités à la patte d'attache 3 et associé à la patte d'attache de manière à effectuer un mouvement longitudinal, les deux pattes d'attache étant fixées rigidement sur le cadre 5 du moyen de transport (non représenté).

En plus du jeu de lames de ressort 1, l'essieu 2 du moyen de transport est pourvu d'une tige 6 à laquelle est associée, à l'aide d'une articulation sphérique, une biellette 7 associée à son tour à l'aide d'une autre articulation spérique, au grand bras du levier 8 à deux bras pouvant tourner autour de l'axe 9, fixé au moyen d'un support 10 sur le cadre 5 du moyen de transport.

Sur le petit bras du levier susmentionné est articulé le deuxième ressort 11 constitué par une tige en C dont l'autre extrémité est articulée à une patte d'attache 12 fixée au cadre 5 du moyen de transport.

Le jeu de lames de ressort 1 est destiné principalement à accomplir la fonction de dispositif de guidage ainsi qu'à recevoir et à transmettre les couples de réaction et de freinage au cadre 5.

La part des charges verticales encaissées par le jeu 1 est relativement faible (jusqu'à 30 % de la charge verticale totale agissant sur la suspension). Le reste de la charge verticale est transmis par la biellette 7 au grand bras du levier 8 et est équilibré par l'effort de réaction du ressort 11, transmis au petit bras du levier indiqué.

Etant donné que le petit bras du levier est beaucoup (approximativement de deux fois) plus court que le grand bras, la force active agissant sur le ressort 11 et sa réaction sont (compte tenu du frottement dans les articulations) d'autant de fois plus grande que la charge verticale se transmettant le long de la biellette 7. En même temps, la variation de la distance entre les articulations (flexion) du ressort, elle sera approximativement autant de fois plus petite (compte tenu de la déformation des bras du levier 8) que le débattement de la suspension (le déplacement vertical de l'essieu 2).

La suspension faisant l'objet de l'invention fonctionne de la façon suivante.

Le moyen de transport étant déchargé, le jeu de lames de ressort 1 fléchit vers la surface de la route sous l'action des forces relatives à sa propre élasticité et de la charge verticale provenant des masses non suspendues. Le ressort 11 à tige est ou n'est pas sollicité sous l'action d'une force de compression normale. Le levier 8 à deux bras est tourné dans le sens horaire ( à partir de la position représentée sur la figure) jusqu'à la position initiale. La biellette 7 est couchée et n'est pas sollicitée ou bien elle est sollicitée sous l'action d'une charge provoquant une extension normale.

Quand la charge du moyen de transport croît jusqu'à la valeur statique, le jeu de lames de ressort 1 se redresse progressivement jusqu'à occuper la position représenté sur le dessin, la biellette 7 se met verticalement et, en agissant sur le grand bras du levier 9, fait tourner ce levier dans le sens contraire au sens horaire. Le petit bras du levier 9 provoque l'extention du ressort 11. L'effort d'extension du ressort croît jusqu'à une valeur permettant, conjointement avec le jeu de lames de ressort, d'équilibrer la charge statique sur l'essieu 2 du moyen de transport.

Avec l'accroissement ultérieur de la charge, jusqu'à sa valeur maximale, le jeu de lames de ressort 1 fléchit vers le haut et ses extrémités s'approchent de la surface de la route. Tout en descendant avec le cadre 5, le levier 8 tourne dans le sens trigonométrique et son petit bras provoque l'extension du ressort à tige 11, dont la charge permet à tout moment, conjointement avec le jeu de lames de ressort, d'équilibrer l'action de la charge statique sur l'essieu 2 du moyen de transport.

Pendant le débattement, la flexion du jeu de lames du ressort 1 dans la direction d'éloignement du cadre 5 peut être plus grande que dans le cas de l'état déchargé décrit ci-dessus. Le ressort 11 à plaquette travaille alors à la compression en amortissant les charges d'inertie transmises au cadre 5 du moyen de transport.

Pour tout les régimes de fonctionnement de la suspension la proportion d'efforts verticaux agissant sur le jeu de lames de ressort 1 et le ressort 11 est proportionnelle à leurs raideurs rapportées.

L'effort de traction et l'effort de freinage ainsi que le couple de réaction et le couple de freinage sont supportés et transmis par le jeu de lames de ressort 1 de même que dans le cas de la suspension connue utilisant les ressorts à lames.

Le ressort 11 à tige sera soumis à la flexion et à l'extension pendant la course de travail de la suspension et à la flexion et à la compression pendant le débattement de la suspension.

Les articulations de la biellette 7 et la rigidité transversale du levier 8 protègent le ressort 11 contre l'action des forces latérales et des couples de torsion.

La cinématique du système élastique constitué par le jeu de lames de ressort 1, la biellette 7, le levier 9 et le ressort à la plaquette 11, ainsi que les déformations élastiques du ressort à tige assurent une non-linéarité remarquable de la caractéristique d'élasticité de la suspension, ce qui permet d'améliorer le confort de fonctionnement du moyen de transport.

La suspension à essieu rigide pour moyen de transport contribue à augmenter la douceur de marche du moyen de transport dans une large gamme de variation de la charge utile, ce qui permet d'améliorer les indices économiques du fonctionnement du transport automobile.

EP 0 367 828 A1

Revendication.

Suspension à essieu rigide d'un moyen de transport du type comprenant un premier ressort formé par un jeu de lames (1) de ressort et un cadre porteur (5) d'un moyen de transport et un deuxième ressort (11) lié par une extrémité au cadre (5) et associé par l'autre extrémité à l'essieu (2), par l'intermédiaire d'un compas d'articulation, caractérisée en ce que le deuxième ressort (11) est constitué par une tige dont la forme dans le plan de flexion est en "C" et en ce qu'un élément du compas d'articulation est constitué par un levier (8) à deux bras, dont l'axe (9) de rotation est assemblé au cadre (5).

Abrégé

## Suspension à essieu rigide pour moyen de transport.

La suspension d'un essieu pour moyen de transport comprend un ressort à lames (1), un cadre porteur (5) supporté par un essieu (2).

Pour augmenter la souplesse de marche d'un moyen de transport dans une large gamme de variation de la charge utile, la suspension comporte un ressort à tige (11), dont la forme dans le plan de flexion est en "C", articulée par une extrémité au cadre (5) et associée par l'autre à l'essieu (2). La liaison de cette dernière extrémité du ressort (11) avec l'essieu 2 est réalisée à l'aide d'une biellette (7), lié par une extrémité à l'essieu (2) et par l'autre au levier (8) à deux bras, raccordé, à son tour, à l'autre extrémité du ressort (11) à tige. L'axe (9) de rotation du levier (8) à deux bras est fixé au cadre (5).

Figure unique

# INTERNATIONAL SEARCH REPORT

International Application No PCT/SU 88/00095

## I. CLASSIFICATION OF SUBJECT MATTER (if several classification symbols apply, indicate all) [6]

According to International Patent Classification (IPC) or to both National Classification and IPC

IPC[4] B60G 11/32

## II. FIELDS SEARCHED

| Minimum Documentation Searched [7] | |
| --- | --- |
| Classification System | Classification Symbols |
| IPC[4] | B60G 11/00÷11/10, 11/32÷11/46 |

Documentation Searched other than Minimum Documentation
to the Extent that such Documents are Included in the Fields Searched [8]

## III. DOCUMENTS CONSIDERED TO BE RELEVANT [9]

| Category [*] | Citation of Document, [11] with indication, where appropriate, of the relevant passages [12] | Relevant to Claim No. [13] |
| --- | --- | --- |
| A | US, A, 1811514 (GEORGE MATAKOVICH) 23 June 1931 (23.06.31) see page 1 lines 59-90, page 2, lines 34-40, figure 3 (cited in the description) | 1 |
| A | GB, A, 2087034 (KIEVSKY INZHENERNO-STROITELNY INSTITUT) 19 May 1982 (19.05.82) see figures 1,11-17 SE, A, 8105666, 24.09.81 FR, B1, 2475171 14.08.86 CA, A, 1179694 18.12.84 | 1 |
| A | SU, A1, 1053910 (Kurgansky mashinostroitelny institut) 15 November 1983 (15.11.83) | 1 |

-----------------

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
| --- | --- |
| 23 November 1988 (23.11.88) | 13 January 1989 (13.01.89) |
| International Searching Authority | Signature of Authorized Officer |
| ISA/SU | |

Form PCT/ISA/210 (second sheet) (January 1985)